# FASCICULE DE BREVET EUROPEEN

(11) **EP 0 743 176 B1**
(45) Date de publication et mention de la délivrance du brevet: **19.09.2001**
(21) Numéro de dépôt: 96401059.9
(22) Date de dépôt: 14.05.1996
(51) Int. Cl.: B32B 17/10, C03C 27/12

(54) **Vitrage feuilleté et procédé de fabrication d'un tel vitrage**
Verbundglasscheibe und Verfahren zur Herstellung eine solche Glasscheibe
Laminated glazing and process for making such a glazing

(30) Priorité: 15.05.1995 FR 9505713
(43) Date de publication de la demande: 20.11.1996
(73) Titulaire: SAINT-GOBAIN GLASS FRANCE, 92400 Courbevoie (FR)
(72) Inventeur: Jacquemet, François, 60350 Vieux Moulin (FR)
(74) Mandataire: Le Cam, Stéphane Georges Elie

(56) Documents cités:
- FR-A- 1 305 847
- GB-A- 576 095
- GB-A- 1 193 267
- GB-A- 2 219 822

## Description

L'invention concerne un nouveau vitrage de sécurité, destiné notamment à être utilisé comme pare-brise pour véhicules automobiles.

La description suivante évoquera le cas des pare-brise pour véhicules mais il va de soi que l'invention peut également concerner les vitrages de sécurité destinés à être montés dans n'importe quelle baie de véhicule ou de bâtiment ; il peut s'agir notamment de lunettes arrières de véhicule automobile pouvant posséder un réseau chauffant.

Les pare-brise couramment utilisés sont des vitrages de sécurité dit « feuilletés », c'est-à-dire formés de deux ou plusieurs feuilles de verre collées par une ou des feuilles intercalaires plastiques, cet intercalaire étant généralement une feuille de polyvinylbutyral.

Les techniques usuelles de fabrication d'un pare-brise feuilleté consistent dans une premier temps à bomber les deux feuilles de verre selon la forme voulue. Pour cela, on superpose les deux feuilles de verre de façon à les bomber simultanément, par exemple par gravité, sur un squelette de bombage qui sera véhiculé dans un four tunnel. Les feuilles de verre sont revêtues sur leurs faces venant en contact d'un produit anti-adhésif pour éviter tous risques de casse lors du bombage. Au préalable, les deux feuilles de verre ont été découpées et façonnées aux dimensions voulues. La dimension de la feuille destinée à être orientée vers l'intérieur de l'habitacle est habituellement inférieure à celle de la feuille extérieure de sorte qu'après bombage les bords des deux feuilles de verre affleurent.

Les feuilles de verre sont ensuite lavées puis séchées pour éliminer le produit anti-adhésif. Durant l'étape suivante, qualifiée d'étape d'assemblage, les feuilles de verre sont repositionnées l'une sur l'autre, celles-ci étant séparées par une feuille intercalaire du type PVB (polyvinylbutyral).

Lors de son positionnement, le PVB se présente sous la forme d'une ou plusieurs feuilles de dimension supérieure à celle des feuilles de verre. Au cours de l'étape d'assemblage, il est nécessaire de découper le PVB aux mesures des feuilles de verre ; il s'agit de l'étape de « détourage ». Suite à cette étape, on procède à l'étape de « prépressage » ; les feuilles de verre sont pressées l'une contre l'autre, soit par des outils mécaniques, soit par réalisation du vide, à une température supérieure à la température ambiante. Puis, dans une étape d'assemblage définitif, le vitrage est introduit dans un autoclave et est soumis à une pression d'environ 10 bars et une température de l'ordre de 130°C.

Un vitrage feuilleté, dit vitrage de sécurité, est ainsi réalisé. Toutefois, le vitrage ainsi réalisé nécessite encore une étape de finition. En effet, le PVB de même que les autres matières plastiques utilisables pour cette application, présente un retrait durant la fabrication du vitrage feuilleté, notamment suite à une élévation de température.

Par ailleurs, ces matières plastiques sont connues pour leur sensibilité à l'humidité. Il est donc préférable que le vitrage feuilleté ne présente pas d'espace vide, en périphérie, entre les deux feuilles de verre, semblable à une rigole pouvant entraîner une retenue d'eau et donc une altération de l'intercalaire. Cette altération de l'intercalaire se traduit généralement par un délaminage de celui-ci et/ou par l'apparition d'un « louche » ou trouble perturbant la vision au travers du vitrage.

Pour éviter ce problème, il est prévu au moment de l'étape de détourage de découper l'intercalaire de sorte que sa dimension reste légèrement supérieure à celle des feuilles de verre. De cette façon, lors du phénomène de retrait du PVB, il ne se crée aucun espace vide entre les deux feuilles de verre. Par contre, le retrait entraîne la formation d'un bourrelet de PVB sur les bords extérieurs du vitrage. Cette technique entraîne différents inconvénients. Tout d'abord, pour effectuer l'étape de détourage en prévoyant un léger débordement de la feuille intercalaire, il est nécessaire de prévoir une étape manuelle ne pouvant être confiée qu'à une main-d'oeuvre expérimentée et possédant une bonne dextérité pour que la feuille intercalaire ne soit pas découpée au ras des feuilles de verre.

De plus, comme il a été énoncé précédemment, il est nécessaire de prévoir une étape de finition. En effet, la présence du bourrelet qui se forme en périphérie du vitrage perturbe la mise en place du joint de montage qui est prévu pour ne couvrir qu'une petite zone du vitrage. De plus, les dimensions du bourrelet sont aléatoires et irrégulières sur la périphérie du vitrage. Il est ainsi impossible de respecter les tolérances dimensionnelles du vitrage. Il est donc nécessaire d'éliminer ce bourrelet dans une étape de finition, dite étape « d'ébarbage ». Cette étape consiste habituellement à ramollir ce bourrelet par chauffage puis à le découper.

Les inventeurs se sont donnés pour mission la réalisation d'un vitrage feuilleté pour laquelle une étape de finition n'est pas nécessaire.

Il a déjà été décrit dans le document EP 0 121 479, la réalisation d'un vitrage feuilleté évitant une telle étape. Pour cela, il est proposé de superposer deux feuilles de verre, dont l'une possède des dimensions inférieures, séparées l'une de l'autre par un intercalaire découpé à priori aux dimensions de la petite feuille de verre. Lors de l'assemblage de ce vitrage, l'intercalaire subit un phénomène de retrait et il se forme donc une rigole en périphérie de la petite feuille de verre. Pour éviter les risques de dégradation par l'eau, il est prévu de placer un cordon qui couvre cette rigole et qui peut être utilisé pour monter le vitrage dans une baie de carrosserie. Le cordon est disposé de façon à être supporté par les zones de la grande feuille non recouvertes par la petite feuille de verre.

L'étape de finition habituelle pour la fabrication d'un vitrage feuilleté est effectivement supprimée. Toutefois, il lui a été substitué une autre étape consistant à déposer le cordon. D'autre part, il n'est pas précisé dans ce document les moyens utilisés pour centrer les feuilles de verre l'une par rapport à l'autre de sorte que la grande feuille déborde en périphérie de façon uniforme pour recevoir le cordon. Une telle réalisation ne peut être réalisée que par des moyens relativement difficiles à mettre en oeuvre donc onéreux et de plus nécessitant une étape plus lente pour assurer ce centrage.

L'invention a donc pour but un vitrage feuilleté ne nécessitant pas d'étape de finition lors de sa réalisation, ni d'autre étape se substituant à celle-ci. Un autre but de l'invention est de pouvoir réaliser un tel vitrage selon les techniques classiques de fabrication de vitrages feuilletés et les outils de fabrication ne devant pas être complètement modifiés.

Ces buts sont atteints selon l'invention par un vitrage feuilleté composé d'au moins deux feuilles de verre et d'au moins une feuille intercalaire, la surface de l'une des feuilles de verre étant inférieure à celle de l'autre feuille de verre, les bords des deux feuilles de verre affleurant en au moins une partie de la périphérie, le bord de la feuille de verre ayant la plus petite surface ne débordant en aucun point de la grande feuille de verre, et la face, de la feuille de verre présentant la plus grande surface, et qui est au contact de la feuille intercalaire, présentant, sur une zone non recouverte par l'autre feuille de verre, un bourrelet formé par l'intercalaire, ledit bourrelet ne dépassant pas de la périphérie de ladite feuille de verre.

Il est ainsi possible lors de la réalisation d'un tel vitrage d'éliminer l'étape de finition qui consiste à découper le bourrelet formé par l'intercalaire en périphérie. En effet, il est possible de découper l'intercalaire aux dimensions de la grande feuille de verre. De cette façon, après retrait du PVB, le bourrelet se forme dans la zone de décalage des deux verres et repose donc sur le grand verre. Il n'est alors pas nécessaire d'éliminer ce bourrelet qui ne gêne pas la mise en place du joint de montage.

Par ailleurs, au niveau des zones périphériques où les feuilles de verre affleurent, il peut apparaître un retrait de l'intercalaire entre les deux feuilles de verre et donc formation d'un espace vide. Toutefois, un tel espace vide est très localisé et ses dimensions correspondent à celles d'une desdites zones périphériques, avantageusement réalisées avec des dimensions ne permettant pas de l'assimiler à une rigole. La formation de tels espaces vides très localisés n'entraîne donc aucun risque de retenue d'eau qui serait nuisible à l'intercalaire.

Un autre avantage de l'invention, outre le fait de supprimer l'étape de finition, est de simplifier l'étape de détourage. Comme on l'a vu précédemment avec les techniques classiques, l'intercalaire est très délicat à découper car il faut prévoir une dimension légèrement supérieure à celle des feuilles de verre. Selon l'invention, cette étape est fortement simplifiée car l'intercalaire est découpé aux mesures de la grande feuille de verre ; il est notamment possible de prendre appui sur la grande feuille de verre pour effectuer cette découpe, ce qui permet notamment d'envisager une automatisation de cette étape.

Le vitrage feuilleté selon l'invention ne pose également aucun problème, lors de sa réalisation, lorsqu'il est nécessaire de positionner les deux feuilles de verre l'une par rapport à l'autre. La présence des zones sur la petite feuille de verre, qui affleurent avec le bord de la grande feuille de verre, assure ce positionnement.

Une autre caractéristique d'un tel vitrage est qu'il comporte un bourrelet formé par l'intercalaire sur la grande feuille de verre dans la zone de décalage des deux feuilles de verre, ledit bourrelet ne dépassant pas de la périphérie de ladite feuille de verre.

Selon une variante, nécessaire notamment lorsqu'il s'agit d'un vitrage automobile et plus particulièrement d'un pare-brise, le vitrage feuilleté présente une courbure selon au moins une direction. La feuille de verre présentant la plus petite surface est positionnée dans la courbure et plus exactement en direction de l'intérieur de l'habitacle lorsque le vitrage est fixé dans la baie d'un véhicule. Un juste positionnement des feuilles de verre est alors primordial durant la phase de bombage.

Pour améliorer et faciliter encore ce positionnement des feuilles de verre, les bords des feuilles de verre affleurent sur au moins une partie de la périphérie sur chaque côté du vitrage.

De préférence, la feuille de verre présentant la plus petite surface comporte au moins une « oreille » ou excroissance qui forme une partie de la périphérie qui affleure avec le bord de l'autre feuille de verre, et de préférence au moins deux oreilles ou excroissances sur le côté inférieur du vitrage.

Une oreille ou excroissance est réalisée avantageusement par formation, en périphérie d'une feuille de verre, d'une courbe présentant deux inflexions. Une telle courbe présente des rayons de courbure variant sur toute sa longueur. Pour faciliter et ne pas modifier les outils d'installations actuelles, les courbes dessinant le contour des oreilles comportent avantageusement des minima des rayons extérieurs, c'est-à-dire ceux dont le centre est placé au centre de la feuille de verre, compris entre 10 et 250 mm et des minima des rayons intérieurs, c'est-à-dire ceux dont le centre est placé à l'extérieur de la feuille de verre, compris entre 60 et 300 mm.

De préférence encore, une oreille présente une longueur comprise entre 10 et 40 mm et de préférence égale à 20 mm et une largeur comprise entre 1 et 4 mm et de préférence égale à 2 mm. La longueur est la distance mesurée parallèlement au bord de la feuille de verre. La longueur choisie permet de ne pas créer de rigole dans laquelle l'eau pourrait stagner. La largeur est mesurée perpendiculairement à la longueur et correspond au décalage précité des deux feuilles de verre.

L'invention propose également un procédé de fabrication d'un tel vitrage feuilleté. Ce procédé reprend les étapes habituelles de fabrication, présentées précédemment, excepté bien entendu l'étape de finition et comporte une étape de détourage modifiée, la feuille intercalaire étant découpée aux dimensions de la feuille de verre présentant la plus grande surface.

D'autres détails et caractéristiques avantageux ressortiront ci-après d'un exemple de réalisation d'un vitrage selon l'invention en référence aux figures 1, 2, 3 et 4 qui représentent :
- Fig. 1 : une vue de dessus d'un vitrage en cours d'élaboration,
- Fig. 2 : une vue de dessus du même vitrage fini,
- Fig. 3 : une vue partielle en coupe A-A du vitrage de la figure 2,
- Fig. 4 : une vue de dessus d'un autre vitrage selon l'invention.

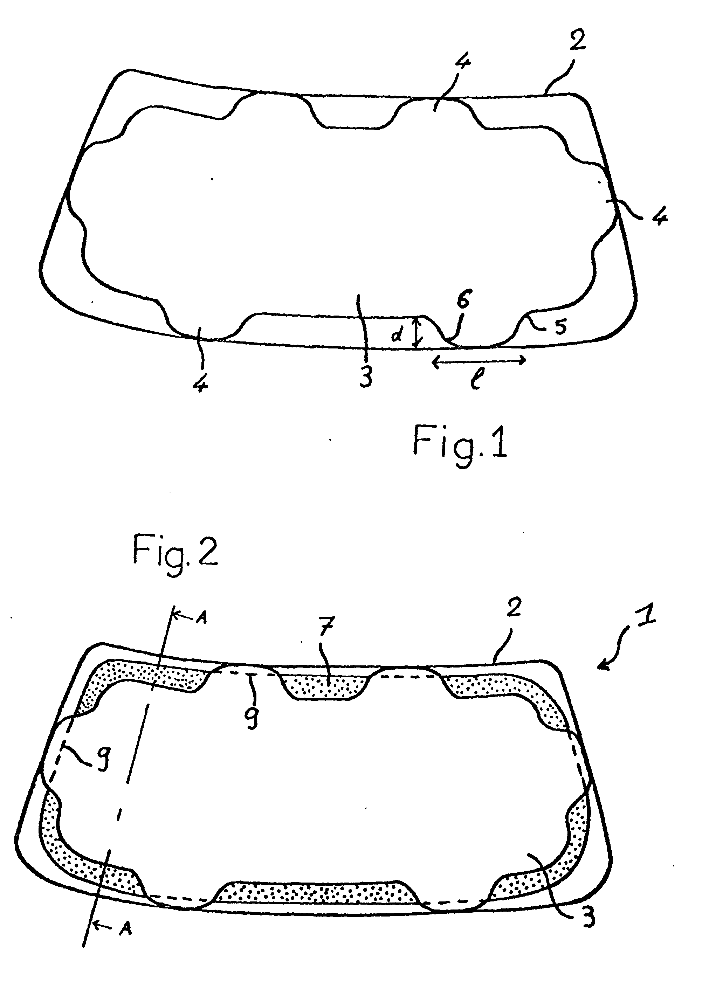

Les figures 1 à 4 ne sont pas reproduites à l'échelle et font apparaître certains détails ou caractéristiques de façon disproportionnée de manière à faciliter la compréhension de l'invention.

Sur la figure 1 est représenté un vitrage 1 en cours d'élaboration. Il peut s'agir notamment de l'assemblage de deux feuilles de verre 2, 3 tel qu'il se présente lors de l'étape de bombage d'un pare-brise. Les deux feuilles de verre 2, 3 sont alors superposées avant de passer dans un four tunnel où elles sont amenées à température de bombage. Dans les techniques habituelles, il est prévu que la feuille de verre 3 placée sur le dessus soit découpée à des dimensions légèrement plus petites que la feuille inférieure 2. Cela permet après bombage que les bords des deux feuilles affleurent sur toute la périphérie. Selon l'invention, cette différence de dimensions des feuilles de verre qui crée un décalage de la périphérie d'une feuille de verre par rapport à celle de l'autre feuille de verre est accentuée de sorte qu'un décalage soit maintenu après bombage sur quasiment toute la périphérie. Toutefois, au niveau de certaines zones, précédemment nommées « oreilles » 4, le bord de la feuille 3 affleure avec celui de la feuille de verre 2. Ces zones ou oreilles 4 permettent, lors de l'empilement des deux feuilles de verre au début de l'étape de bombage, de centrer les feuilles de verre l'une par rapport à l'autre. Il est effectivement important que les feuilles soient bien centrées l'une par rapport à l'autre avant leur bombage. Pour effectuer ce centrage, on utilise des butées, habituellement utilisées pour ces opérations, qui sont placées en regard des oreilles 4. Ces oreilles jouent également un rôle important durant l'étape d'assemblage. En effet, lorsque les feuilles de verre sont introduites dans l'autoclave, celles-ci sont le plus souvent dans une position quasiment verticale. La présence d'oreilles en partie basse de la feuille de verre 3 permet d'éviter tout risque de glissement de celle-ci, l'assemblage n'étant pas fini. Le positionnement et le nombre d'oreilles sont choisis en fonction de la dimension du vitrage à réaliser. Sur l'exemple de la figure 1, la feuille de verre 3 comporte une oreille sur chacun des petits côtés et deux oreilles sur chacun des grands côtés. Cette répartition permet de répartir les forces de façon symétrique lors du centrage. Il apparaît utile de prévoir au moins deux oreilles sur au moins un des grands côtés pour éviter tout risque de pivotement de la feuille 3 lors du centrage. Ces deux oreilles sont de préférence en partie basse, également pour supprimer tout risque de pivotement de la feuille 3, cette fois-ci lors du passage dans l'autoclave, sous l'effet de la gravité.

Par ailleurs, les oreilles 4 qui sont une modification de la découpe périphérique de la feuille de verre 3 sont réalisées simultanément à la découpe de ladite feuille de verre 3. Pour ce faire et dans le souci de ne pas modifier les outils habituellement utilisés pour la découpe et le façonnage des feuilles de verre, les dimensions des oreilles 4 sont choisies pour être réalisées sans problème par ces outils. Ces oreilles 4 de formes arrondies présentent notamment des courbures 6 ayant des minimums des rayons intérieurs compris entre 60 et 300 mm et des courbures 5 ayant des minimums des rayons extérieurs compris entre 10 et 250 mm. La longueur « l » d'une oreille 4 est comprise entre 10 et 40 mm et choisie de préférence égale à 20 mm. La largeur « d » d'une oreille 4 est comprise entre 1 et 4 mm et de préférence égale à 2 mm. Cette largeur « d » correspond bien entendu au décalage existant en périphérie entre les deux feuilles de verre, aux endroits où les oreilles ne sont pas présentes.

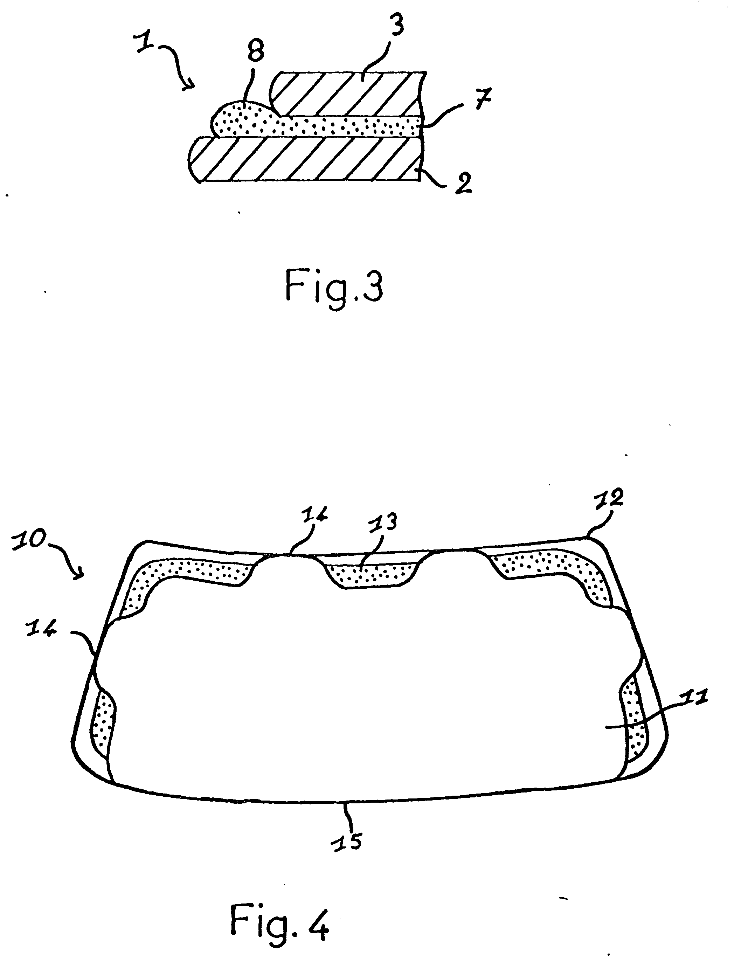

Le bombage terminé, les feuilles de verre 2, 3 sont lavées puis séchées, notamment pour éliminer le produit anti-adhésif dont il a été fait mention précédemment. On procède ensuite à l'étape d'assemblage dans laquelle une feuille intercalaire 7, telle que du PVB, est placée entre les deux feuilles de verre 2, 3. Cette feuille de PVB 7 se présente initialement avec des dimensions nettement supérieures à celles des feuilles de verre. On procède alors à l'étape de détourage qui, selon l'invention, consiste à découper la feuille de PVB 7 aux dimensions de la feuille de verre 2. Une telle étape peut ainsi être très simplement automatisée, contrairement aux techniques habituelles qui requièrent une grande minutie pour obtenir une découpe du PVB conduisant à des dimensions légèrement supérieures à celles des feuilles de verre. L'assemblage est ensuite réalisé, comme il a été présenté précédemment. Durant l'assemblage, la feuille intercalaire 7 subit un phénomène de retrait et forme un bourrelet 8 en périphérie du vitrage. Ce bourrelet 8 est représenté sur la figure 3. Ce bourrelet 8 repose sur la feuille de verre 2 dans la zone de décalage entre les deux feuilles de verre. Au niveau des oreilles 4, il peut se former par contre un espace vide entre les deux feuilles de verre. Cet espace vide est symbolisé par les lignes pointillées 9 désignant la limite de la feuille intercalaire de PVB. Contrairement à ce qui se produit lorsqu'un tel espace vide est formé sur toute la périphérie du vitrage, la présence des espaces vides obtenus selon l'invention ne présente aucun risque vis-à-vis de l'humidité. En effet, les dimensions des oreilles, auxquelles correspondent les espaces vides formés, sont telles qu'elles ne permettent aucune stagnation d'eau. L'altération du PVB due à une stagnation d'eau est donc évitée. Au niveau de ces oreilles 4, il peut également se former un léger bourrelet ; toutefois dans un tel cas, l'élimination de ce léger bourrelet est très simple et ne nécessite pas en soi une étape supplémentaire.

Par ailleurs, le bourrelet 8 de PVB qui se forme en périphérie du vitrage, sur la feuille de verre 2, n'augmente aucunement les dimensions de celui-ci. Il est donc possible de fixer un joint de montage en périphérie du vitrage sans risque de voir une déformation de ce joint telle qu'elle apparaît lorsque le bourrelet déborde de la périphérie du vitrage, selon les techniques de fabrication habituelles.

L'étape d'ébarbage nécessaire selon les techniques actuelles de fabrication est donc inutile lors de la fabrication du vitrage feuilleté 1 selon l'invention.

La figure 4 illustre une variante de l'invention. Selon cette variante, le vitrage feuilleté 10 se compose toujours de deux feuilles de verre 11, 12 séparées par une feuille intercalaire de type PVB 13. La feuille de verre 11 qui selon l'invention présente la plus petite surface comporte des oreilles 14 sur trois côtés. Le côté 15 formant la partie basse du vitrage ne comporte aucune oreille ; il affleure par contre, sur toute la longueur, au côté correspondant de la feuille de verre 12. Cette réalisation permet de faciliter le positionnement de la feuille 11 sur la feuille de verre 12, notamment durant les étapes d'assemblage. De plus, une seule oreille 14 sur l'un des petits côtés de la feuille de verre 11 pourrait être suffisante pour centrer les feuilles de verre sans risque de rotation. Par ailleurs, conformément à l'invention durant l'étape de détourage, la feuille de PVB 13 est découpée aux dimensions de la grande feuille de verre, exceptée sur le côté 15. En effet, en ce qui concerne le vitrage 10 de la figure 4, il est possible de prévoir une découpe du PVB sur le côté 15 comme elle se fait actuellement, c'est-à-dire en prévoyant une dimension de la feuille de PVB légèrement supérieure à celle de la feuille de verre 12. De cette façon, après retrait du PVB, on retrouve un bourrelet extérieur au vitrage 10 sur la longueur du côté 15. Toutefois, il n'est pas nécessaire de prévoir une étape de finition pour l'éliminer car la partie basse d'un pare-brise n'est généralement pas recouverte sur la tranche d'un joint de montage; le bourrelet de PVB n'est donc pas gênant à cet endroit. De plus, il est invisible car masqué par le capot du véhicule.

Les différents vitrages conformes à l'invention présentés précédemment peuvent être réalisés sans l'étape de finition qui consiste habituellement à éliminer le bourrelet formé en périphérie du vitrage par le PVB. Par ailleurs, le plus souvent, l'étape de détourage, lors de la fabrication de vitrage selon l'invention peut être simplifiée et éventuellement automatisée assez simplement, la feuille intercalaire étant découpée aux dimensions de la plus grande feuille de verre.

Par ailleurs, les vitrages selon l'invention présentent d'autres avantages. Il est notamment possible d'insérer partiellement des éléments fonctionnels entre les deux feuilles de verre sans risque que la partie sortante de l'élément fonctionnel ne soit endommagée car elle ne déborde pas à la périphérie du vitrage. Un tel élément fonctionnel est par exemple un conducteur métallique pouvant servir d'amenée de courant pour alimenter par exemple un réseau chauffant ou bien une couche chauffante d'une lunette arrière d'un véhicule automobile. Un conducteur métallique de ce type peut être placé lors de l'étape d'assemblage sur la face de la petite feuille de verre, au contact de l'intercalaire. L'extrémité sortante du conducteur métallique ne déborde pas de la périphérie du vitrage. Dans une variante, la partie sortante du conducteur métallique peut épouser la forme du bord du vitrage et son extrémité est collée sur l'autre face de la petite feuille de verre. La partie sortante du conducteur métallique ne se trouve ainsi pas en périphérie du vitrage mais sur la zone de décalage entre les deux feuilles de verre. De plus, le bourrelet de PVB qui vient en appui sur le bord de la petite feuille de verre peut protéger cette partie sortante du conducteur métallique.

Un autre avantage, lié plus particulièrement au décalage des deux verres est de pouvoir faire cheminer un élément fonctionnel, par exemple un fil conducteur sur cette zone de décalage, c'est-à-dire au contact du bourrelet. La présence d'un tel fil n'augmente pas l'encombrement du vitrage et peut permettre par exemple de déplacer une connexion électrique à la périphérie du vitrage par exemple d'un côté vers un autre.

## Revendications

1. Vitrage feuilleté (1) composé d'au moins deux feuilles de verre (2,3 ; 11,12) et d'au moins une feuille intercalaire (7,13), la surface de l'une des feuilles de verre étant inférieure à celle de l'autre feuille de verre, les bords des deux feuilles de verre affleurant en au moins une partie de la périphérie, et le bord de la feuille de verre ayant la plus petite surface ne débordant en aucun point de la grande feuille de verre, **caractérisé en ce que** la face, de la feuille de verre (2,12) présentant la plus grande surface, qui est au contact de la feuille intercalaire, présente, sur une zone non recouverte par l'autre feuille de verre, un bourrelet (8) formé par l'intercalaire (7,13), et **en ce que** ledit bourrelet (8) ne dépasse pas de la périphérie de ladite feuille de verre (2, 12).

2. Vitrage selon la revendication 1 **caractérisé en ce qu'**il présente une courbure selon au moins une direction, et **en ce que** la feuille de verre (3, 11) présentant la surface la plus petite est positionnée dans la courbure.

3. Vitrage selon l'une des revendications précédentes **caractérisé en ce que** les bords des feuilles de verre affleurent sur au moins une partie de la périphérie sur chaque côté du vitrage.

4. Vitrage selon l'une des revendications précédentes **caractérisé en ce que** la feuille de verre (3,11) présentant la plus petite surface comporte au moins une " oreille " (4,14) ou excroissance qui forme une partie de la périphérie qui affleure avec le bord de l'autre feuille de verre.

5. Vitrage selon la revendication 4 **caractérisé en ce que** la feuille de verre (3,11) présentant la plus petite surface comporte au moins deux oreilles (4,14) ou excroissances sur le côté inférieur du vitrage.

6. Vitrage selon l'une des revendications 4 ou 5, **caractérisé en ce qu**'une oreille (4,14) ou excroissance est réalisée par formation, en périphérie d'une feuille de verre, d'une courbe présentant deux inflexions.

7. Vitrage selon la revendication 6 **caractérisé en ce que** la courbe dessinant le contour d'une oreille (4,14) comporte un minimum des rayons intérieurs compris entre 60 et 300 mm et un minimum des rayons extérieurs compris entre 10 et 250 mm.

8. Vitrage selon l'une des revendications 4 à 7 **caractérisé en ce qu'**une oreille (4,14) ou excroissance présente une longueur comprise entre 10 et 40 mm et une largeur comprise entre 1 et 4 mm.

9. Vitrage selon l'une des revendications précédentes **caractérisé en ce qu'**il comporte un élément fonctionnel inséré entre les feuilles de verre (2,3;11,12) et/ou un élément fonctionnel cheminant sur la zone, de la feuille de verre (2,12) présentant la plus grande surface, non recouverte par l'autre feuille de verre.

10. Procédé de fabrication d'un vitrage feuilleté (1) tel que décrit aux revendications 1 à 9 **caractérisé en ce que** lors de l'étape de détourage, la feuille intercalaire (7,13) est découpée aux dimensions de la feuille de verre la plus grande (2,12).

## Claims

1. Laminated glazing (1) comprising at least two glass sheets (2, 3; 11, 12) and at least one spacer sheet (7, 13), the surface of one of the glass sheets being smaller than that of the other glass sheet, the edges of the two glass sheets being flush at at least part of the periphery, and the edge of the glass sheet having the smaller surface at no point projecting over the larger glass sheet, **characterized in that** the face of the glass sheet (2, 12) having the larger surface and which is in contact with the spacer sheet has, over an area not covered by the other glass sheet, a bead (8) formed by the spacer sheet (7, 13) and in that said bead (8) does not project beyond the periphery of said glass sheet (2, 12).

2. Glazing according to claim 1, **characterized in that** it has a curvature in at least one direction and in that the glass sheet (3, 11) having the smaller surface is positioned in the curvature.

3. Glazing according to one of the preceding claims, **characterized in that** the edges of the glass sheets are flush over at least part of the periphery on each side of the glazing.

4. Glazing according to one of the preceding claims, **characterized in that** the glass sheet (3, 11) having the smaller surface has at least one "ear" (4, 14) or excrescence, which forms part of the periphery flush with the edge of the other glass sheet.

5. Glazing according to claim 4, **characterized in that** the glass sheet (3, 11) having the smaller surface has at least two ears 4, 14) or excrescences on the lower side of the glazing.

6. Glazing according to one of the claims 4 or 5, **characterized in that** an ear (4, 14) or excrescence is obtained by the formation, on the periphery of a glass sheet, of a curve having two inflexions.

7. Glazing according to claim 6, **characterized in that** the curve outlining the contour of an ear (4, 14) has a minimum of internal radii between 60 and 300 mm and a minimum of external radii between 10 and 250 mm.

8. Glazing according to one of the claims 4 to 7, **characterized in that** an ear (4, 14) or excrescence has a length between 10 and 40 mm and a width between 1 and 4 mm.

9. Glazing according to one of the preceding claims, **characterized in that** it has a functional element inserted between the glass sheets (2, 3; 11, 12) and/or a functional element passing over the zone, of the glass sheet (2, 12) having the larger surface, not covered by the other glass sheet.

10. Process for the production of a laminated glazing (1) as described in claims 1 to 9, **characterized in that** during the cutting out stage, the spacer sheet (7, 13) is cut to the dimensions of the larger glass sheet (2, 12).

## Patentansprüche

1. Verbundglasscheibe (1), welche aus mindestens zwei Glasscheiben (2, 3; 11, 12) und mindestens einer Zwischenfolie (7, 13) zusammengesetzt ist, wobei die Fläche einer der Glasscheiben kleiner als die der anderen Glasscheibe ist, die Ränder der zwei Glasscheiben in wenigstens einem Teil des Umfangs miteinander abschließen und der Rand der Glasscheibe mit der kleineren Fläche an keinem Punkt über die größere Glasscheibe hinausragt, **dadurch gekennzeichnet, dass** die Seite der die größere Fläche aufweisenden Glasscheibe (2, 12), welche sich mit der Zwischenfolie in Kontakt befindet, in einem Bereich, der nicht von der anderen Glasscheibe bedeckt ist, eine von der Zwischenfolie (7, 13) gebildete Wulst (8) besitzt, **und dass** die Wulst (8) nicht über den Umfang der Glasscheibe (2, 12) vorsteht.

2. Verbundglasscheibe nach Anspruch 1, **dadurch gekennzeichnet, dass** sie in mindestens einer Richtung eine Biegung besitzt, **und dass** die Glasscheibe (3, 11), welche die kleinere Fläche aufweist, in der Biegung angeordnet ist.

3. Verbundglasscheibe nach einem der vorhergehenden Ansprüche, **dadurch gekennzeichnet, dass** die Ränder der Glasscheiben in wenigstens einem Teil des Umfangs auf jeder Seite der Verbundglasscheibe miteinander abschließen.

4. Verbundglasscheibe nach einem der vorhergehenden Ansprüche, **dadurch gekennzeichnet, dass** die Glasscheibe (3, 11), welche die kleinere Fläche aufweist, mindestens ein "Ohr" (4, 14) bzw. eine Ausbuchtung umfasst, die einen Teil des Umfangs bildet, der mit dem Rand der anderen Glasscheibe abschließt.

5. Verbundglasscheibe nach Anspruch 4, **dadurch gekennzeichnet, dass** die Glasscheibe (3, 11), welche die kleinere Fläche aufweist, mindestens zwei "Ohren" (4, 14) bzw. Ausbuchtungen auf der kleineren Seite der Verbundglasscheibe umfasst.

6. Verbundglasscheibe nach Anspruch 4 oder 5, **dadurch gekennzeichnet, dass** ein "Ohr" (4, 14) bzw. eine Ausstülpung am Umfang einer Glasscheibe durch Bildung einer zwei Wendepunkte aufweisenden Kurve realisiert wird.

7. Verbundglasscheibe nach Anspruch 6, **dadurch gekennzeichnet, dass** die den Umfang eines "Ohrs" (4, 14) bildende Kurve ein Minimum der Innenradien von 60 bis 300 mm und ein Minimum der Außenradien von 10 bis 250 mm enthält.

8. Verbundglasscheibe nach einem der Ansprüche 4 bis 7, **dadurch gekennzeichnet, dass** die Länge eines "Ohrs" bzw. einer Ausbuchtung (4, 14) 10 bis 40 mm und die Breite 1 bis 4 mm beträgt.

9. Verbundglasscheibe nach einem der vorhergehenden Ansprüche, **dadurch gekennzeichnet, dass** sie ein zwischen den Glasscheiben (2, 3; 11, 12) eingefügtes Funktionselement und/oder ein Funktionselement enthält, das durch den Bereich der Glasscheibe (2, 12), welche die größere Fläche aufweist, führt, der nicht von der anderen Glasscheibe bedeckt ist.

10. Verfahren zur Herstellung einer Verbundglasscheibe (1) nach den Ansprüchen 1 bis 9, **dadurch gekennzeichnet, dass** in der Zuschneidstufe die Zwischenfolie (7, 12) auf die Maße der größeren Glasscheibe (2, 12) zugeschnitten wird.
